(19) Europäisches Patentamt
European Patent Office
Office européen des brevets

(11) **EP 1 889 811 A1**

(12) **EUROPEAN PATENT APPLICATION**

(43) Date of publication:
**20.02.2008 Bulletin 2008/08**

(51) Int Cl.:
*C02F 1/28* (2006.01)          *C02F 1/44* (2006.01)

(21) Application number: **07113415.9**

(22) Date of filing: **30.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **17.08.2006 EP 06119070**

(71) Applicants:
• **UNILEVER N.V.**
  **3013 AL Rotterdam (NL)**
  Designated Contracting States:
  **AT BE BG CH CZ DE DK EE ES FI FR GR HU IS IT LI LT LU LV MC NL PL PT RO SE SI SK TR**
• **UNILEVER PLC**
  **London, Greater London EC4P 4BQ (GB)**
  Designated Contracting States:
  **CY GB IE MT**

(72) Inventors:
• **Bellamy, Kathryn,**
  **c/o UNILEVER R&D COLWORTH**
  **Sharnbrook, Bedford,**
  **Bedfordshire MK44 1LQ (GB)**
• **Findlay, Paul, Hugh,**
  **c/o UNILEVER R&D PORT SUNLIGHT**
  **Bebington,**
  **Wirral Merseyside CH63 3JW (GB)**
• **Rannard, Steven, Paul,**
  **c/o UNILEVER R&D PORT SUNLIGHT**
  **Bebington,**
  **Wirral Merseyside CH63 3JW (GB)**
• **Ryan, Philip, Michael,**
  **c/o UNILEVER R&D PORT SUNLIGHT**
  **Bebington,**
  **Wirral Merseyside CH63 3JW (GB)**

(74) Representative: **Kan, Jacob Hendrik**
  **Unilever Patent Group**
  **Olivier van Noortlaan 120**
  **3133 AT Vlaardingen (NL)**

(54) **Aqueous media purification method and device comprising a functionalised polyhipe resin**

(57)    The present invention relates to the field of water purification, especially water purification with PolyHIPE resin. It is an object of the present invention to provide a suitable means for the removal of microbial matter from water. In particular it is an object of the invention to provide a virus removal means capable of at least two Log removal. Accordingly, the present invention provides a method for the purification of aqueous media comprising the step of contacting a contaminated aqueous medium with PolyHIPE resin. The present invention further provides a PolyHIPE resin co-polymer comprising a styrene based monomer and a cross-linker and a second styrene based monomes. The resin is aminated, sulphonated or betainated.

EP 1 889 811 A1

**Description**

**Field of the invention**

The present invention relates to the field of water purification, especially water purification with PolyHIPE resin.

**Background**

Drinking water is becoming a scarcely available commodity; not only in the developed world, but also in developing and emerging countries (also referred to as D&E countries). It is especially desirable to remove microbial matter from the water for making it suitable and safe for drinking and maintenance of good health. Especially virus removal is a challenge.

Several different methods are known for e.g. filtration of water based on which various devices have been designed and are also commercially available. These methods and devices vary depending on whether the application is for industrial use or for household use and also critically upon the pressure at which the water to be purified is available.

In co-pending applications EP 05077094.0 and EP 06075057.7 carbon based cartridges and carbon block filters are described for the removal of microorganisms from water in a water purification method.

Carbon based filter cartridges have the disadvantage that the log reduction for viruses is too low to be classed as a virus removal agent. A further disadvantage is that the rejuvenation of carbon based filters is cumbersome and often requires heating the filter, which is not a preferred route, especially not for household use.

Another known absorbent matrix is PolyHIPE. PolyHIPE, which is a highly absorbent material being a <u>Poly</u>merisation product of a <u>H</u>igh <u>I</u>nternal <u>P</u>hase <u>E</u>mulsion, is a known absorption material in the art of household cleaning.

In EP A 0 068 830 and EP A 0 351 907, wipes containing PolyHIPE absorbent material are disclosed. In these publications, the PolyHIPE material is used to carry a cleaning composition containing an anti-viral agent.

WO00/34454 and WO04/005355 disclose media for growth of microorganisms which comprise PolyHIPE and may be cross-linked and/or having sulphonated /aminated groups.

WO97/19347 discloses the use of PolyHIPE polymers as chromatographic substrate for separation of various organic moities including virus.

It is an object of the present invention to provide a suitable means for the removal of microbial matter from water.

In particular it is an object of the invention to provide a virus removal means capable of two Log removal (i.e. 100 fold reduction or 99% removal), preferably three Log removal and even four Log. Log removal is defined as the $\log_{10}$ of the number of input particles minus the $\log_{10}$ of the number of output particles. In the field of virus removal, a virus removal means can be understood to be an agent which shows a four Log (10,000 fold) or better reduction in the number of virus from the feed stream.

At present there is a widely felt need for filtered and purified water. This is not only restricted to urban localities with sufficient water, but also extending to remote places and water scarce urban centres where online systems are not readily available or functional. There exists a constant need for development of improved means for water purification to fulfil the increasing need of clean and safe drinking water.

It has now been surprisingly found that PolyHIPE resins can be used to remove virus from water.

**Definition of the invention**

Accordingly, the present invention provides a method for the purification of aqueous media comprising the step of contacting a contaminated aqueous medium with PolyHIPE resin.

The present invention further provides a PolyHIPE resin co-polymer comprising a styrene based monomer and a cross-linker.

The invention further provides a water purification device. The device comprises a water inlet, a water outlet and a holder comprising PolyHIPE resin.

These and other aspects, features and advantages will become apparent to those of ordinary skill in the art from a reading of the following detailed description and the appended claims. For the avoidance of doubt, any feature of one aspect of the present invention may be utilised in any other aspect of the invention. It is noted that the examples given in the description below are intended to clarify the invention and are not intended to limit the invention to those examples per se. Similarly, all percentages are weight/weight percentages of the low environmental detergent product composition unless otherwise indicated. Numerical ranges expressed in the format "from x to y" are understood to include x and y. When for a specific feature multiple preferred ranges are described in the format "from x to y", it is understood that all ranges combining the different endpoints are also contemplated.

**Detailed description**

In one aspect the invention relates to a method for the purification of contaminated aqueous media with PolyHIPE resin. The contaminated aqueous media may for instance be water or blood plasma.

For the purification of drinking water, the removal of microbial matter from water is a main challenge. In the context of this invention microbial matter includes bacteria, yeasts, cysts, protozoa and virus. The invention particularly relates to the removal of virus from drinking water.

Virus removal is becoming a more and more important aspect of drinking water purification. The virus removal device of the invention preferably removes at least 99% (2-log removal) of the virus in the feed stream, more preferably more than 99.9% (3-log removal). It is still more preferred to remove at least 99.99% (4-log removal).

Preferably the PolyHIPE resins for the removal of microbial matter from contaminated aqueous media comprise of at least a monomer possessing a vinyl group and a crosslinker. Such PolyHIPE resins are disclosed in EP A 0 068 830.

The purification method comprises the step of contacting contaminated aqueous medium with PolyHIPE resin. The method may further comprise other purification steps, such as filtration.

The contacting of the contaminated aqueous medium with PolyHIPE resin may be achieved by mixing the medium with the resin, passing the contaminated medium through a column comprising PolyHIPE resin or by any other means as long as the contaminated aqueous medium comes in contact with the PolyHIPE resin.

Water purification device

In another aspect the invention provides a water purification device. The device comprises a water inlet, a water outlet and a holder comprising PolyHIPE resin.

The device preferably comprises a water inlet filter to remove particulate matter from the feed water.

The PolyHIPE resin in the holder may for instance be in the form of particles, in the form of a monolith or as a PolyHIPE functionalised membrane.

When the PolyHIPE resin in the holder is in the form of particles, the particles preferably have a particle size between 20 and 120$\mu$m. The particles in the holder may be packed or unpacked, preferably packed.

The water purification device is particularly suitable for the purification of drinking water or the purification of blood or blood fractions.

PolyHIPE resin

In another aspect the invention relates to PolyHIPE resins that are particularly suitable in the context of the invention.

The preferred PolyHIPE resin according to the invention is a co-polymer comprising at least one styrene base monomer and at least one crosslinker.

The reactive styrene-based monomer is preferably selected from vinyl benzyl chloride (VBC), acetoxy styrene, vinyl benzoic acid, 4-, 3- and 2-vinyl pyridine, N-vinyl carbazole and derivatives and/or mixtures thereof. Vinyl benzyl chloride is particularly preferred.

The PolyHIPE resin according to the invention may further comprise a second styrene based monomer, preferably selected from Styrene (ST) or other vinyl-functionalised aromatics such as vinyl naphthalene. The styrene moiety can be post-functionalised by such methods as sulphonation or chloromethylation to give a sulphonic acid or benzyl chloride group respectively.

In order to get a 3-dimentional polymer network with suitable pore size and porosity, a cross-linker is used. The co-polymer effectively forms a matrix that is suitable for the removal of microbial matter from water, especially the removal of virus from water. A cross-linker is a monomer that when added during the polymerisation process links one polymer chain to another by means of covalent bonds.

Preferred cross linkers according to the invention are linear, branched or cyclic hydrocarbon molecules comprising at least two terminal C=C bonds. The most preferred cross-linker is divinylbenzene (DVB).

The styrene base monomer(s) to crosslinker ratio is preferably between at least 10:90, more preferably at least 25:75, most preferably at least 50:50 % by weight. The ratio is preferably less than 95:5, more preferably less than 90:10, still more preferably less than 85:15 or even less than 75:25 % by weight.

Preparation

PolyHIPE resins according to the invention may for instance be prepared according to the methods as disclosed in EP-A1-0 068 830.

Functionalised PolyHIPE

The PolyHIPE resin according to the invention may optionally be functionalised to improve the virus removing properties. The functionalisation of this type is matrix is widely known in the art.

Preferred functionalised PolyHIPE resins are aminated and/or sulphonated and/or betainated PolyHIPE resins. Examples of the functionalisation method are given herein below. Preferred aminated PolyHIPE is obtained by amination with trialkylamine, more preferably with trimethylamine or triethylamine. Sulphonation is obtained by functionalisation with sulphuric acid. Betainated resin is obtained by functionalisation with a betaine.

The PolyHIPE resin preferable contains at least 0.5 mmol/g functional groups, more preferably at least 1 mmol/g. The polyHIPE may contain up to 5 mmol/g functional groups. These groups may bind in an associative manner to the virus particle and immobilise it in the polymer matrix. This binding will be dependant on the flow rate and the aspect of the polymer filtration device.

Regeneration

The polymer matrix may be regenerated by conventional means e.g. by passing a concentrated electrolyte or acidic or alkaline solution through the filter. For example, in the case of the aminated resin a concentrated solution of acid or metal salt solution such as sodium chloride could regenerate the active site by preferentially replacing the virus particles. This procedure is well known to those familiar with ion exchange resins.

**Examples**

The invention will now be illustrated by way of the following non-limiting examples, in which all parts and percentages are by weight unless otherwise indicated.

**Example 1**

Example 1 shows methods for preparing PolyHIPE according to the invention.

Preparation of DVB/VBC, DVB/VBC/Styrene and ST/DVB polyHIPES

Span 80 (Sorbitane monooleate) and divinyl benzene (DVB) were added to chloromethyl styrene (VBC) and or styrene. Potassium persulphate was dissolved in de-ionised water and added slowly to the stirring monomer/surfactant mixture. After complete addition, the emulsion solution was poured into a pre-formed mould and heated to 60 °C for 18 hours. Following the polymerisation the polymer monolith was washed by continuous extraction with hexane prior to drying under vacuum at 40 °C. The monolith could then be crushed as required prior to the subsequent chemical modifications.

Amination

10 g of VBC/DVB/Styrene PolyHIPE was placed in round bottomed flask, to this was added 150 cm$^3$ trimethylamine or triethylamine (33 wt % solution in ethanol) (0.8 mols) and another 100 cm$^3$ of ethanol. The mixture was then heating to 70 °C with stirring for 6 hours. The polymer was then filtered off, washed with ethanol (2 x 100 cm$^3$), acetone (2 x 100 cm$^3$) and then finally continually extracted with acetone for 6 hours before drying under vacuum (40 °C) for 24 hours. This procedure was also performed for the other aminations.

Betainisation

10 g of VBC/DVB/Styrene PolyHIPE was placed in round bottomed flask, to this was added 150 cm$^3$ of dimethylamine. The mixture was then heating to 70 °C with stirring for 6 hours. The polymer was then filtered off, washed with ethanol (2 x 100 cm$^3$), acetone (2 x 100 cm$^3$) and then finally continually extracted with acetone for 6 hours before drying under vacuum (40 °C) for 24 hours. This aminated resin was then treated with an excess of chloroacetic acid in THF, heated to 40 °C for 8 hours, filtered off and washed and dried as previously described to give a polyHIPE with carbobetaine functionality.

Amination and Sulfonation

10 g of VBC/DVB/Styrene PolyHIPE was placed in round bottomed flask, to this was added 150 cm$^3$ trimeth-

ylamine (33 wt % solution in ethanol) (0.8 mols) and another 100 cm$^3$ of ethanol. The mixture was then heating to 70 °C with stirring for 6 hours. The polymer was then filtered off, washed with ethanol (2 x 100 cm$^3$), acetone (2 x 100 cm$^3$) and then finally continually extracted with acetone for 6 hours before drying under vacuum (40 °C) for 24 hours. The polymer was then post-sulfonated as described previously to give a resin with both quaternary ammonium and sulfate groups.

Sulphonation

10 g of ground Styrene/DVB PolyHIPE material was placed in a round bottomed flask. To this was added concentrated sulphuric acid (200 cm$^3$) and dichloromethane 100 (cm$^3$) to help increase swelling and wettability of the polymer. This mixture was then heated to 45 °C with stirring for 24 hours. After this mixture was poured carefully onto a mixture of ice/water. The product was then filtered off and washed with distilled water (5 x 100 cm$^3$) and then acetone (2 x 100 cm$^3$). Finally the product was washed via continuous extraction with acetone for 6 hours and dried under vacuum (40 °C) for 24 hours.

Results

In tables 1 and 2 below the results are shown of materials made using the above methods. S.A is the surface area of the material in m2/g. C, H, N, Cl and Sulphur are the percentage amounts of the respective elements (carbon, hydrogen, nitrogen, chlorine and sulphur) in the PolyHIPE and nitrogen, chlorine and sulphur are also given as mmol per gram PolyHIPE.

Table 1: PolyHIPE analysis

| SAMPLE | S.A/M2/g | C | H | N | Cl | S (S mmol/g) | N -mmol/g | Cl-mmol/g |
|---|---|---|---|---|---|---|---|---|
| **0.85 VBC 0.15 DVB** | 10.13 | 76.61 | 6.73 | | 15.2 | | 0 | 4.2816901 |
| *Aminated-0.85 VBC 0.15 DVB* | | 62.11 | 8.13 | 3.79 | 9.67 | | 2.7071429 | 2.7239437 |
| **0.75 VBC 0.25 DVB** | 15.87 | 77.5 | 6.77 | | 15.21 | | 0 | 4.284507 |
| *Aminated-0.75 VBC 0.25 DVB* | | 64.03 | 7.73 | 3.45 | 9.49 | | 2.4642857 | 2.6732394 |
| **0.6 VBC 0.4 DVB** | 17.62 | 80.55 | 7.1 | | 13.19 | | 0 | 3.715493 |
| *Aminated-0.6 VBC 0.4 DVB* | | 71.33 | 7.66 | 2.44 | 7.1 | | 1.7428571 | 2 |
| **0.5 VBC 0.5 DVB** | 18.4 | 82.38 | 7.21 | | 9.04 | | 0 | 2.5464789 |
| *Aminated-0.5 VBC 0.5 DVB* | | 74.15 | 7.76 | 2.17 | 6.73 | | 1.55 | 1.8957746 |
| **0.5 VBC 0.25 DVB 0.25 ST** | 4.94 | 77.97 | 7.19 | | 10.92 | | 0 | 3.0760563 |
| *Aminated-0.5 VBC 0.25 DVB 0.25 ST* | | 72.02 | 8.1 | 2.76 | 8.41 | | 1.9714286 | 2.3690141 |
| **0.25 VBC 0.25 DVB 0.5 ST** | 3.4 | 86.03 | 7.43 | | 6.02 | | 0 | 1.6957746 |
| *Aminated-0.25 VBC 0.25 DVB 0.5 ST* | | 80.36 | 7.77 | 1.63 | 5.2 | | 1.1642857 | 1.4647887 |
| **0.75 ST 0.25 DVB** | | 91.06 | 7.77 | | | | | |
| *Sulphonated 0.75 ST 0.25 DVB* | | 54.74 | 5.66 | | | 10.8 (3.375) | | |
| **0.6 VBC 0.4 DVB - N,N'-Dimethyloctadecylamine aminated** | | 76.17 | 8.95 | 2.77 | 7.14 | | 1.97 | 2.01 |
| **0.6 VBC 0.4 DVB - N, N'-dimethylethanolamine aminated** | | 69.26 | 7.70 | 3.25 | 9.46 | | 2.32 | 2.66 |
| **0.6 VBC 0.4 DVB - N,N'-dimethylbutylamine aminated** | | 73.79 | 8.31 | 2.81 | 8.96 | | 2.00 | 2.52 |
| **0.5 VBC 0.25 DVB 0.25 ST Aminated & Sulfonated** | | 65.08 | 7.22 | 4.05 | 0.73 | 5.07 | 2.89 | 0.21 |
| **0.25 VBC 0.5 DVB 0.25 ST Aminated & Sulfonated** | | 74.25 | 7.35 | 2.8 | 1.2 | 2.99 | 2.00 | 0.34 |
| **0.5 VBC 0.5 DVB Carbobetaine** | | 76.49 | 7.74 | 2.35 | 8.36 | | 1.68 | 2.35 |
| **0.6 VBC 0.4 DVB Carbobetaine** | | 73.83 | 7.85 | 2.93 | 8.74 | | 2.09 | 2.46 |
| **0.75 VBC 0.25 DVB Carbobetaine** | | 69.47 | 8.08 | 4.08 | 10.55 | | 2.91 | 2.97 |

## Example 2

In example 2 virus challenge results are shown.

Method 1

PolyHIPE was weighed (0.05g) and added to 5ml deionised water, left overnight to expand and then packed into a chromatography column (10mm internal diameter) the height of the column was approximately 0.9mm depending on the type of polyHIPE. Water was pumped through the column at a rate of 5ml/min$^{-1}$ to ensure the polymer was washed free of any monomers. Once the PolyHIPEhad been prepared it was challenged with poliovirus.

Poliovirus Type 1 (LSa ATCC No VR-59)) was grown in Vero cells using a standard method. Virus stock was kept at -70°C until required. Just prior to testing the virus stock was thawed and diluted in sterile deionised water. The following aliquots of Poliovirus solution and water were pumped through the column in sequence and the column effluent was collected separately:

1) 5ml Poliovirus,
2) 5ml Poliovirus
3) 5ml Water
4) 5ml Water
5) 5ml Water.
Each aliquot was assayed for the presence of virus.

Titration of virus: Monolayers of Vero cells were cultured in 96 well cell culture plates at 37°C in a humidified incubator (95%air/5% carbon dioxide atmosphere). Ten-fold dilutions of virus suspension i.e. separate sets of dilutions from each eluent (in cell culture medium) were prepared. One hundred micro litres of each dilution was added to five replicate wells of the 96 well plate. Plates were incubated at 37°C in a humidified incubator for 7 days, then the plates were examined under an inverted microscope for cytopathic effects caused by the virus on the cells. The infective dose was calculated using the Karber formula.

Results

The table below shows the recovered virus for each of the process steps described above.

Table 2: Comparative data

| PolyHIPE % VBC/DVB/ Styrene | Virus Recovered TCID$_{50}$/0.1ml | | | | | |
|---|---|---|---|---|---|---|
| | Challenge | Challenge 1 | Challenge 2 | Post wash 1 | Post Wash 2 | Post Wash 3 |
| 50/50/0 | 3.7<br>3.9<br>3.7 | 2.1<br>0.5<br>2.5 | 2.1<br>1.7<br>2.3 | 2.1<br>2.1<br>1.9 | 2.1<br>1.1<br>0.9 | 1.5<br>0.7<br>0.5 |
| 60/40/0 | 3.5<br>3.7<br>3.9 | 0.5<br>0.5<br>0.5 | 1.1<br>0.5<br>0.7 | 1.7<br>0.9<br>1.1 | 0.7<br>0.9<br>0.9 | 0.5<br>0.7<br>0.9 |
| 75/25/0 | 3.9<br>3.3<br>3.7 | 1.7<br>2.3<br>1.9 | 2.5<br>2.1<br>2.3 | 2.7<br>1.7<br>2.5 | 1.5<br>2.5<br>1.9 | 0.5<br>1.7<br>1.5 |
| 85/15/0 | 3.7<br>3.7<br>3.5 | 2.7<br>2.5<br>0.5 | 4.1<br>2.7<br>2.7 | 3.7<br>2.5<br>3.1 | 0.7<br>1.9<br>2.7 | 0.5<br>1.9<br>2.1 |
| 50/25/25 | 3.5<br>3.7<br>3.7 | 2.7<br>3.1<br>2.1 | 2.9<br>2.9<br>3.1 | 3.1<br>2.9<br>2.5 | 2.1<br>0.7<br>1.5 | 2.5<br>2.1<br>1.3 |
| 25/25/50 | 3.5 | 2.7 | 2.3 | 2.5 | 1.9 | 1.1 |

(continued)

| PolyHIPE % VBC/DVB/ Styrene | Virus Recovered $TCID_{50}$/0.1ml | | | | | |
|---|---|---|---|---|---|---|
| | Challenge | Challenge 1 | Challenge 2 | Post wash 1 | Post Wash 2 | Post Wash 3 |
| | 2.9 3.3 | 2.3 2.3 | 2.5 2.3 | 2.5 2.5 | 1.5 1.7 | 1.3 1.3 |
| 0/25/75 Sulphonated | 3.3 | 0.5 | 0.5 | 0.5 | 0.5 | 0.7 |
| 0/50/50 Sulphonated | 3.3 | 0.5 | 0.5 | 0.9 | 0.7 | 0.5 |

<u>Calculation of Challenge and Virus Break Through</u>

The challenge is given in $TCID_{50}$/0.1 ml. In the above experiments, 10 ml is passed through the PolyHIPE column, resulting in a multiplication factor of 100.

$$\text{Total virus} = \text{Multiplication factor} \times 10^{\wedge}(\text{Challenge}[TCID_{50}/0.1ml])$$

The virus breakthrough is calculated in the same way as the total virus, and the Total Virus Breakthrough is the sum of challenges 1 and 2 and Postwashes 1,2 and 3.

<u>Calculation of Virus Retention</u>

$$\text{Virus retention \%} = 100 - (\text{Virus Breakthrough / challenge}) \times 100.$$

Table 3: Comparative data

| PolyHIpe % VBC/DVB/ Styrene | | Challenge | Breakthrough | Virus Retention | Mean Retention % |
|---|---|---|---|---|---|
| 50/50/0 | | 501187.2336 794328.2347 501187.2336 | 26759.64707 9838.733433 30314.61905 | 94.66 98.76 93.95 | 95.79 |
| 60/40/0 | | 316227.766 501187.2336 794328.2347 | 3702.220257 1361.149618 1832.49844 | 98.83 99.73 99.77 | 99.44 |
| 75/25/0 | | 794328.2347 199526.2315 501187.2336 | 45115.93886 37094.19927 35312.12105 | 94.32 81.41 92.95 | 89.56 |
| 85/15/0 | | 501187.2336 501187.2336 316227.766 | 905524.3919 64625.42063 119517.7349 | -_80.68 87.11 62.21 | 74.66 |
| 50/25/25 | | 316227.766 501187.2336 501187.2336 | 149828.0594 148924.3147 87631.05594 | 52.62 70.29 82.52 | 68.47 |
| 25/25/50 | | 31622.766 | 55448.16544 | 82.47 | |

(continued)

| PolyHIpe % VBC/DVB/ Styrene | | | | |
|---|---|---|---|---|
| | Challenge | Breakthrough | Virus Retention | Mean Retention % |
| | 79432.82347<br>199526.2315 | 44177.53816<br>39267.57878 | 44.38<br>80.32 | 69.07 |
| 0/25/75 Sulphonated | 199526.2315 | 883.0491 | 99.56 | 99.56 |
| 0/50/50 Sulphonated | 199526.2315 | 1122.099 | 99.48 | 99.48 |

Table 4: PolyHIPEs according to the invention

| SAMPLE | Challenge | Breakthrough | Virus Retention | Mean Retention % |
|---|---|---|---|---|
| **0.6 VBC 0.4 DVB-N,**<br>**N.-Dimethyloctadecylamine aminated** | 1258925.412<br>794328.2347 | 975.5288827<br>22453.18134 | 99.923<br>97.173 | 98.55 |
| **0.6 VBC 0.4 DVB - N,N'**<br>**-dimethylethanolamine aminated** | 1258925.412<br>794328.2347 | 1500.968472<br>74300.19459 | 99.881<br>90.646 | 95.26 |
| **0.6 VBC 0.4 DVB - N,N'-**<br>**dimethylbutylamine aminated** | 1258925.412<br>794328.2347 | 790.569415<br>2637.604064 | 99.937<br>99.668 | 99.80 |
| **0.5 VBC 0.25 DVB 0.25 ST Aminated &**<br>**Sulfonated** | 316227.766 | 16030.27881 | 94.931 | 94.93 |
| **0.25 VBC 0.5 DVB 0.25 ST Aminated &**<br>**Sulfonated** | 7943282.347 | 2876.654298 | 99.964 | 99.96 |
| **0.5 VBC 0.5 DVB Carbobetaine** | 7943282.347 | 883.0491488 | 99.989 | 99.99 |
| **0.6 VBC 0.4 DVB Carbobetaine** | 7943282.347 | 790.569415 | 99.990 | 99.99 |
| **0.75 VBC 0.25 DVB Carbobetaine** | 7943282.347 | 1593.448206 | 99.980 | 99.98 |

Thus, the results show that Polio virus can be removed from water. The results also show that a 4-log polio virus reduction is possible with PolyHIPE resin and the disclosed method of the invention, whereas only 2-log could be obtained with known PolyHIPEs.

Method 2

PolyHIPE was weighed (0.05g) and added to 5ml deionised water, left overnight to expand and then packed into a chromatography column (10mm internal diameter) the height of the column was approximately 0.9mm depending on the type of polyHIPE. Water was pumped through the column at a rate of 5ml/min to ensure the polymer was washed free of any monomers. Once the PolyHIPE had been prepared it was challenged with poliovirus.

Poliovirus Type 1 (LSa ATCC No VR-59)) was grown in Vero cells using a standard method. Virus stock was kept at -70°C until required. Just prior to testing the virus was thawed and diluted in sterile deionised water. The following was pumped through in sequence and the column effluent collected separately: 10 X 5ml virus challenge.

The effluent from each 5ml aliquot was collected and assayed for the presence of virus. The polyHIPE was then eluted with 10X 5ml deionised water and effluent from each 5ml aliquot collected and assayed for virus.

Titration of virus: Monolayers of Vero cells were cultured in 96 well cell culture plates at 37°C in a humidified incubator (95%air/5% carbon dioxide atmosphere). Ten-fold dilutions of virus suspension i.e. separate sets of dilutions from each eluent (in cell culture medium) were prepared. One hundred micro litres of each dilution was added to five replicate wells of the 96 well plate. Plates were incubated at 37°C in a humidified incubator for 7days, then the plates were examined under an inverted microscope for cytopathic effects caused by the virus on the cells. The infective dose was calculated using the Karber formula

Results

Challenge

| PolyHlpe % VBC/DVB/ Styrene | TCID$_{50}$/0-1 m/ of virus recovered | | | | | | | | | | |
|---|---|---|---|---|---|---|---|---|---|---|---|
| | C0 | C1 | C2 | C3 | C4 | C5 | C6 | C7 | C8 | C9 | C10 |
| 50/50/0 | 2.5 | 1.9 | 2.3 | 2.1 | 1.5 | 1.8 | 1.5 | 1.7 | 1.7 | 1.5 | 1.3 |
| | 3.7 | 1.5 | 1.7 | 1.7 | 1.5 | 1.5 | 1.5 | 1.7 | 1.9 | 1.5 | 1.5 |
| | 3.5 | 1.5 | 1.5 | 1.7 | 1.5 | 1.2 | 1.7 | 1.7 | 1.3 | 1.3 | 1.9 |
| 60/40/0 | 3.1 | 1.1 | 1.3 | 1.5 | 1.7 | 1.7 | 2.1 | 1.1 | 1.5 | 1.5 | 1.7 |
| | 2.9 | 1.1 | 1.7 | 1.3 | 1.1 | 1.5 | 1.9 | 2.3 | 2.1 | 1.7 | 2.1 |
| | 2.5 | 0.7 | 1.1 | 0.9 | 1.3 | 1.5 | 1.3 | 1.9 | 1.5 | 1.7 | 1.9 |
| 75/25/0 | 3.1 | 0.5 | 0.5 | 0.5 | 0.5 | 2.1 | 1.7 | 2.1 | 1.7 | 2.3 | 1.9 |
| | 3.1 | 1.9 | 2.5 | 1.1 | 2.3 | 1.9 | 1.9 | 2.1 | 2.1 | 2.5 | 1.7 |
| | 3.5 | 1.9 | 2.1 | 2.5 | 2.1 | 2.5 | 1.9 | 2.9 | 2.5 | 2.1 | 1.9 |
| 85/15/0 | 2.7 | 2.5 | 2.5 | 2.1 | 2.3 | 2.1 | 2.3 | 2.5 | 2.3 | 2.3 | 2.3 |
| | 2.7 | 2.7 | 2.7 | 2.5 | 2.5 | 2.7 | 2.5 | 2.5 | 2.5 | 1.9 | 2.3 |
| | 2.7 | 2.1 | 2.5 | 2.5 | 2.3 | 2.9 | 2.7 | 2.3 | 2.7 | 2.7 | 2.9 |
| 50/25/25 | 3.3 | 2.7 | 2.7 | 2.3 | 2.3 | 2.5 | 2.3 | 2.5 | 2.5 | 2.5 | 1.9 |
| | 3.1 | 2.5 | 2.3 | 2.5 | 2.7 | 2.1 | 2.5 | 2.3 | 2.5 | 2.3 | 2.1 |
| | 3.5 | 2.7 | 2.9 | 2.5 | 2.7 | 2.7 | 3.1 | 2.7 | 2.9 | 2.9 | 2.7 |
| 25/25/50 | 3.3 | 1.9 | 2.9 | 2.7 | 2.9 | 2.3 | 2.3 | 2.5 | 2.5 | 2.5 | 2.5 |
| | 3.3 | 2.7 | 2.5 | 2.9 | 3.1 | 3.1 | 3.5 | 3.3 | 3.3 | 2.9 | 3.5 |
| | 3.1 | 2.5 | 2.5 | 2.9 | 2.7 | 2.1 | 2.3 | 2.5 | 2.5 | 2.5 | 2.1 |
| 0/25/75 Sulphonated | 3.7 | 0.9 | 0.7 | 0.5 | 0.5 | 0.5 | 0.7 | 0.5 | 0.5 | 0.5 | 0.7 |
| 0/50/50 Sulphonated | 3.7 | 1.3 | 1.1 | 1.5 | 1.7 | 1.5 | 1.3 | 1.7 | 1.9 | 1.3 | 1.5 |

Wash

| PolyHlpe % VBC/DVB/ Styrene | TCID$_{50}$/0.1 m/ of virus recovered | | | | | | | | | |
|---|---|---|---|---|---|---|---|---|---|---|
| | W1 | W2 | W3 | W4 | W5 | W6 | W7 | W8 | W9 | W10 |
| 50/50/0 | 1.5 | 1.3 | 0.9 | 0.5 | 0.7 | 1.1 | 1.1 | 0.7 | 0.5 | 1.1 |
| | 1.9 | 1.3 | 1.1 | 1.3 | 0.9 | 0.5 | 0.7 | 1.1 | 0.7 | 0.7 |
| | 1.7 | 1.5 | 1.1 | 0.5 | 1.1 | 0.7 | 1.3 | 1.1 | 0.5 | 0.5 |
| 60/40/0 | 1.3 | 0.5 | 0.5 | 0.5 | 0.5 | 0.5 | 0.5 | 0.5 | 0.5 | 0.5 |
| | 1.7 | 0.5 | 0.7 | 0.7 | 0.5 | 0.7 | 0.7 | 0.5 | 0.9 | 0.5 |
| | 1.5 | 0.9 | 1.1 | 0.7 | 0.5 | 0.9 | 0.9 | 0.5 | 0.5 | 0.5 |
| 75/25/0 | 2.1 | 1.5 | 0.5 | 0.7 | 1.1 | 1.7 | 1.5 | 0.9 | 0.9 | 0.9 |
| | 2.1 | 1.9 | 1.1 | 1.5 | 0.9 | 0.9 | 1.1 | 0.7 | 0.7 | 0.7 |
| | 2.1 | 1.3 | 1.7 | 1.5 | 1.5 | 1.3 | 1.1 | 0.9 | 0.7 | 1.1 |
| 85/15/0 | 1.7 | 1.3 | 1.5 | 1.5 | 1.3 | 1.5 | 1.5 | 1.3 | 1.5 | 1.5 |
| | 2.9 | 2.5 | 1.7 | 1.7 | 1.3 | 1.7 | 1.5 | 1.3 | 1.5 | 1.1 |
| | 3.1 | 2.7 | 2.7 | 2.9 | 1.5 | 1.7 | 1.9 | 1.7 | 1.9 | 1.7 |
| 50/25/25 | 2.3 | 1.9 | 2.1 | 1.5 | 1.5 | 1.3 | 0.9 | 1.5 | 1.3 | 1.5 |
| | 2.1 | 1.5 | 1.5 | 1.7 | 1.1 | 1.3 | 1.1 | 1.3 | 1.5 | 1.0 |
| | 3.3 | 2.5 | 2.3 | 1.9 | 1.7 | 1.9 | 1.7 | 2.1 | 1.7 | 1.3 |
| 25/25/50 | 2.5 | 1.7 | 2.1 | 1.9 | 1.9 | 1.5 | 1.5 | 1.5 | 1.5 | 0.3 |
| | 2.5 | 0.9 | 1.7 | 1.5 | 2.1 | 0.9 | 0.7 | 0.9 | 0.5 | 0.9 |
| | 1.9 | 1.5 | 1.7 | 1.1 | 1.1 | 0.9 | 0.9 | 0.9 | 0.5 | 0.5 |

(continued)

| PolyHlpe % VBC/DVB/ Styrene | TCID$_{50}$/0.1 m/ of virus recovered | | | | | | | | | |
|---|---|---|---|---|---|---|---|---|---|---|
| | W1 | W2 | W3 | W4 | W5 | W6 | W7 | W8 | W9 | W10 |
| 0/25/75 Sulphonated | 1.1 | 0.9 | 0.5 | 0.5 | 0.5 | 0.7 | 0.5 | 0.5 | 0.5 | 0.5 |
| 0/50/50 Sulphonated | 1.5 | 0.9 | 0.7 | 0.5 | 0.7 | 0.7 | 0.5 | 0.5 | 0.5 | 0.5 |

Calculation of % retention is as above except that the volume of challenge is 50ml therefore the inverse log is multiplied by 500. The virus breakthrough is calculated from the challenge 10 X5ml and the wash 10 X 5ml.

Method 2 : Calculation of virus retention by PolyHIPE (in Deionised water)

| PolyHIPE % VBC/DVB/ Styrene | | | |
|---|---|---|---|
| | Challenge | Breakthrough | Mean % Retention |
| 50/50/0 | 1581138.83<br>2505936.168<br>1581138.83 | 37295.99908<br>28584.37307<br>35902.4696 | 97.60 |
| 60/40/0 | 629462.7059<br>397164.1174<br>158118.883 | 23233.06473<br>40071.27539<br>20930.07173 | 92.89 |
| 75/25/0 | 629462.7059<br>629462.7059<br>1581138.83 | 46374.03818<br>84037.67675<br>134738.965 | 90.66 |
| 85/15/0 | 1581138.83<br>997631.1575<br>250293.6168 | 171105.0843<br>407527.6863<br>205877.0443 | 72.27 |
| 50/25/25 | 997631.1575<br>629462.7059<br>1581138.83 | 182059.4908<br>148250.7339<br>471507.8672 | 75.01 |
| 25/25/50 | 997631.1575<br>997631.1575<br>629462.7059 | 231539.423<br>789901.5162<br>177316.1221 | 54.33 |
| 0/25/75 Sulphonated | 2505936.168 | 4481.645887 | 99.82 |
| 0/50/50 Sulphonated | 2505936.168 | 20869.93939 | 99.17 |

Thus, the results show that Polio virus can be removed from water. The results also show that only a 2-log polio virus reduction is possible with PolyHIPE resins disclosed in the art.

Higher log reduction in virus titre may be achieved in an increased weight of polyHIPE is used for a defined volume of water or the poyHIPE is cast in a particular shape.

**Claims**

1.  A PolyHIPE resin co-polymer comprising:

    (a) 50-90% of a styrene based monomer;

(b) 10-40% a <u>cross-linker;</u> And
(c) A second styrene based monomer
Wherein the resin is aminated, sulphonated or betainated.

2.  A PolyHIPE resin according to claim 1, wherein the styrene based monomer is selected from vinyl benzyl chloride (VBC), acetoxy styrene, vinyl benzoic acid, 4-, 3- and 2-vinyl pyridine, N-vinyl carbazole and derivatives and/or mixtures thereof.

3.  A PolyHIPE resin according to any one of claims 1 or 2, wherein the cross-linker is divinylbenzene.

4.  A PolyHIPE resin according to any one of claims 1-3, wherein a second styrene based monomer is present.

5.  A method for the purification of aqueous media comprising the step of:

    (a) Contacting a contaminated aqueous medium with the PolyHIPE resin according to anyone of claims 1-4.

6.  A method according to claim 5, wherein the aqueous medium is drinking water.

7.  A method according to any one of claims 4 or 5, wherein the contamination is virus.

8.  A water purification device comprising:

    (a) a water inlet
    (b) a water outlet
    (c) a holder comprising the PolyHIPE resin according to anyone of claims 1-4.

9.  A water purification device according to claim 8, further comprising a coarse filter to remove particulate matter from the feed water.

**European Patent Office**

**EUROPEAN SEARCH REPORT**

Application Number

EP 07 11 3415

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 863 957 A (LI NAI-HONG [CA] ET AL) 26 January 1999 (1999-01-26) * column 5, line 43 - column 6, line 13 * * column 14, line 59 - column 15, line 6 * | 1-4 | INV. C02F1/28 C02F1/44 |
| X | GB 950 501 A (WOLFEN FILMFAB VEB) 26 February 1964 (1964-02-26) * page 1, line 51 - line 73; examples 1-3 * | 1-4 | |
| X | US 4 224 415 A (MEITZNER ERICH F ET AL ERICH F MEITZNER [US] ET AL) 23 September 1980 (1980-09-23) * column 1, line 47 - line 56; claims 1-12; example IV * * column 6, line 62 - column 8, line 23 * * column 11, line 60 - column 12, line 15 * | 1-4 | |
| Y | US 4 217 421 A (BEASLEY GLENN H [US]) 12 August 1980 (1980-08-12) * column 3, line 1 - column 4, line 24 * * column 1, line 9 - line 23 * | 1-4 | TECHNICAL FIELDS SEARCHED (IPC) C02F A61L B01D A61M A61K C08F |
| Y | WO 2004/004880 A (AKAY GALIP [GB]) 15 January 2004 (2004-01-15) * page 4, paragraph 4 - page 5, paragraph 2 * * page 15, paragraph 2 - page 18, paragraph 3 * | 1-4 | |
| Y | WO 02/10070 A (UNIV NEWCASTLE [GB]; AKAY GALIP [GB]; VICKERS JOHN [GB]) 7 February 2002 (2002-02-07) * page 3, line 30 - page 4, line 12 * * page 5, line 5 - line 18 * * page 10 * | 1-4 | |

-/--

The present search report has been drawn up for all claims

| Place of search | Date of completion of the search | Examiner |
|---|---|---|
| Munich | 12 November 2007 | Oenhausen, Claudia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

European Patent
Office

**EUROPEAN SEARCH REPORT**

Application Number

EP 07 11 3415

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 97/19347 A (PHARMACIA BIOTECH AB [SE]; ALLMER KLAS [SE]; BERGGREN EVA [SE]; ERIKSS) 29 May 1997 (1997-05-29) * page 3, line 1 - line 11; claims 1-34 * * page 3, line 1 - line 3 * * page 11, line 3 - line 18 * * page 5, line 33 - page 6, line 11 * ----- | 1-9 | |
| Y | WO 00/34454 A2 (UNIV NEWCASTLE [GB]; AKAY GALIP [GB]; DOWNES SANDRA [GB]; PRICE VICTOR) 15 June 2000 (2000-06-15) * page 5, paragraph 4 - page 6, paragraph 1; claims 1-20 * * page 8, paragraph 4 - page 9, paragraph 3 * * page 24, paragraph 4; examples A1-A5 * ----- | 1-9 | |
| Y | WO 2004/005355 A (AKAY GALIP [GB]) 15 January 2004 (2004-01-15) * page 1, paragraph 1; claims 1-44 * * page 8, paragraphs 2,6 * * page 9, paragraph 4 * * page 16, paragraph 4 - paragraph 5 * * page 20, paragraph 6 * ----- | 1-9 | TECHNICAL FIELDS SEARCHED (IPC) |
| A | N.R. CAMERON ET AL: "The influence of porogen type on the porosity, surface area and morphology of poly(divinylbenzene) PolyHIPE foams" J. OF MATERIALS CHEMISTRY, [Online] 12 September 2000 (2000-09-12), pages 1-20, XP002414882 Durham, UK Retrieved from the Internet: URL:http://pubs.rsc.org/ej/JK/2000/B003596 N/> [retrieved on 2007-01-15] * the whole document * ----- | 1-9 | |

-/--

The present search report has been drawn up for all claims

| Place of search | Date of completion of the search | Examiner |
|---|---|---|
| Munich | 12 November 2007 | Oenhausen, Claudia |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

**European Patent Office**

**EUROPEAN SEARCH REPORT**

Application Number

EP 07 11 3415

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2004/086480 A1 (WORLEY SHELBY D [US] ET AL) 6 May 2004 (2004-05-06) * paragraphs [0009], [0027]; claims 1-78 * ----- | 1-9 | |

TECHNICAL FIELDS SEARCHED (IPC)

The present search report has been drawn up for all claims

| Place of search | Date of completion of the search | Examiner |
|---|---|---|
| Munich | 12 November 2007 | Oenhausen, Claudia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 11 3415

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2007

| Patent document cited in search report | | | Publication date | Patent family member(s) | | Publication date |
|---|---|---|---|---|---|---|
| US 5863957 | A | | 26-01-1999 | NONE | | |
| GB 950501 | A | | 26-02-1964 | NL | 271098 A | |
| US 4224415 | A | | 23-09-1980 | CH | 448534 A | 15-12-1967 |
| | | | | CH | 415056 A | 15-06-1966 |
| | | | | DE | 1420737 A1 | 17-10-1968 |
| | | | | FR | 1237343 A | 29-07-1960 |
| | | | | GB | 932126 A | 24-07-1963 |
| | | | | GB | 932125 A | 24-07-1963 |
| | | | | NL | 241315 A | |
| | | | | US | 4256840 A | 17-03-1981 |
| | | | | US | 4501826 A | 26-02-1985 |
| | | | | US | 4297220 A | 27-10-1981 |
| | | | | US | 4486313 A | 04-12-1984 |
| US 4217421 | A | | 12-08-1980 | AR | 223819 A1 | 30-09-1981 |
| | | | | AU | 517667 B2 | 20-08-1981 |
| | | | | AU | 3747278 A | 03-01-1980 |
| | | | | BR | 7803977 A | 13-03-1979 |
| | | | | CA | 1130499 A1 | 24-08-1982 |
| | | | | DE | 2827955 A1 | 18-01-1979 |
| | | | | ES | 471392 A1 | 01-04-1980 |
| | | | | ES | 8104330 A1 | 01-07-1981 |
| | | | | FI | 781995 A | 28-12-1978 |
| | | | | FR | 2401190 A1 | 23-03-1979 |
| | | | | FR | 2396030 A1 | 26-01-1979 |
| | | | | GB | 1598389 A | 16-09-1981 |
| | | | | IN | 148660 A1 | 02-05-1981 |
| | | | | IT | 1159861 B | 04-03-1987 |
| | | | | JP | 1190044 C | 13-02-1984 |
| | | | | JP | 54011086 A | 26-01-1979 |
| | | | | JP | 58021535 B | 30-04-1983 |
| | | | | NL | 7806891 A | 29-12-1978 |
| | | | | SE | 7806736 A | 28-12-1978 |
| WO 2004004880 | A | | 15-01-2004 | AU | 2003251326 A1 | 23-01-2004 |
| | | | | EP | 1526914 A2 | 04-05-2005 |
| | | | | GB | 2393438 A | 31-03-2004 |
| WO 0210070 | A | | 07-02-2002 | AU | 7647201 A | 13-02-2002 |
| | | | | EP | 1307402 A2 | 07-05-2003 |
| | | | | JP | 2004504940 T | 19-02-2004 |
| | | | | US | 2005045564 A1 | 03-03-2005 |
| WO 9719347 | A | | 29-05-1997 | EP | 0862737 A1 | 09-09-1998 |

For more details about this annex : see Official Journal of the European Patent Office, No. 12/82

## ANNEX TO THE EUROPEAN SEARCH REPORT
## ON EUROPEAN PATENT APPLICATION NO.

EP 07 11 3415

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2007

| Patent document cited in search report | | Publication date | Patent family member(s) | | Publication date |
|---|---|---|---|---|---|
| WO 9719347 | A | | JP | 2000501175 T | 02-02-2000 |
| | | | JP | 3925872 B2 | 06-06-2007 |
| | | | US | 6290853 B1 | 18-09-2001 |
| WO 0034454 | A2 | 15-06-2000 | AU | 1575700 A | 26-06-2000 |
| | | | EP | 1183328 A2 | 06-03-2002 |
| | | | JP | 2003516713 T | 20-05-2003 |
| WO 2004005355 | A | 15-01-2004 | AU | 2003255713 A1 | 23-01-2004 |
| | | | EP | 1519963 A1 | 06-04-2005 |
| US 2004086480 | A1 | 06-05-2004 | AU | 2003284358 A1 | 07-06-2004 |
| | | | BR | 0315757 A | 06-09-2005 |
| | | | CA | 2503377 A1 | 21-05-2004 |
| | | | CN | 1708226 A | 14-12-2005 |
| | | | EP | 1555877 A2 | 27-07-2005 |
| | | | JP | 2006504850 T | 09-02-2006 |
| | | | KR | 20050083876 A | 26-08-2005 |
| | | | MX | PA05004429 A | 26-07-2005 |
| | | | WO | 2004040978 A2 | 21-05-2004 |
| | | | ZA | 200503187 A | 28-06-2006 |

## REFERENCES CITED IN THE DESCRIPTION

**Patent documents cited in the description**

- EP 05077094 A
- EP 06075057 A
- EP 0068830 A
- EP 0351907 A
- WO 0034454 A
- WO 04005355 A
- WO 9719347 A
- EP 0068830 A1